# EUROPÄISCHE PATENTSCHRIFT

(11) **EP 2 053 254 B1**
(45) Veröffentlichungstag und Bekanntmachung des Hinweises auf die Patenterteilung: **17.03.2010**
(21) Anmeldenummer: 07020744.4
(22) Anmeldetag: 24.10.2007
(51) Int. Cl.: F15B 13/044, G06K 19/07

(54) **Fluidische Ventilanordnung mit wenigstens einem Elektromagnetventil und einem Identifikationsdatenspeicher**
Fluid valve assembly with at least one electromagnetic valve and an identification data containing device
Système de soupapes fluidiques doté d'au moins une soupape électromagnétique et un module de stockage des données d'identification

(43) Veröffentlichungstag der Anmeldung: 29.04.2009
(73) Patentinhaber: FESTO AG & Co. KG, 73734 Esslingen (DE)
(72) Erfinder: Gehrke, Martin, 71384 Weinstadt (DE); Deichert, Helmut, 71336 Waiblingen (DE)
(74) Vertreter: Vetter, Hans

(56) Entgegenhaltungen:
- EP-A- 1 760 642
- WO-A-03/017015
- WO-A-2005/015330
- GB-A- 2 294 531
- JP-A- 2002 119 726

## Beschreibung

Die Erfindung betrifft eine fluidische Ventilanordnung mit wenigstens einem Elektromagnetventil, dessen Magnetspule über nur zwei Steuerleitungen mit einer elektronischen Steuer- und/oder Kommunikationsvorrichtung verbunden oder verbindbar ist.

Zur Identifikation von Komponenten einer Anlage, wie einer fluidischen Anlage, sind solche Komponenten häufig mit Typenschildern versehen, um sie identifizieren zu können. Dies ist sowohl für die Auswahl der Komponenten als auch für den Austausch, für die Wartung und für die Fehlersuche von Bedeutung. Insbesondere bei sehr großen Anlagen ist dieses Ablesen von Typenschildern jedoch sehr aufwendig und umständlich.

Aus der EP 1760642 A2 ist eine Ventilerkennungseinrichtung bekannt, bei der die Ventile mit Transpondern versehen sind, die Identifikationsdaten des jeweiligen Ventils erhalten und die drahtlos mittels eines Lesegeräts ausgelesen werden können. Hierzu müssen die Ventile jedoch jeweils mit vorprogrammierten Transpondern versehen werden, und es ist ein spezielles Lesegerät erforderlich.

Aus der WO 03/017015 A1 sind Einzelkomponenten einer Getriebebaueinheit mit Datenspeichern zur Speicherung von Identifikationsdaten bekannt, die drahtlos oder über separate Leitungen einer zentralen Einheit zuführbar sind. Auch hier sind wiederum zusätzliche Komponenten für die drahtlose Übertragung oder zusätzliche Leitungen erforderlich.

Eine Aufgabe der vorliegenden Erfindung besteht darin, Identifikationsdaten von Elektromagnetventilen drahtgebunden ohne erforderliche zusätzliche Leitungen auslesen zu können.

Diese Aufgabe wird erfindungsgemäß durch eine fluidische Ventilanordnung mit den Merkmalen des Anspruchs 1 gelöst.

Die erfindungsgemäße Lösung hat insbesondere den Vorteil, dass die beiden ohnehin vorhandenen Steuerleitungen zur Betätigung des Elektromagnetventils der Ventilanordnung zusätzlich dazu verwendet werden, Identifikationsdaten eines im Elektromagnetventil integrierten Speichers an eine Steuervorrichtung oder Kommunikationsvorrichtung für das Ventil zu übertragen. Hierdurch kann zum Beispiel ein mit einer Modulatoreinrichtung versehenes Elektromagnetventil ein herkömmliches Elektromagnetventil ersetzen, ohne dass zur Datenübertragung zusätzliche Leitungen installiert werden müssten.

Durch die in den Unteransprüchen aufgeführten Maßnahmen sind vorteilhafte Weiterbildungen und Verbesserungen der im Anspruch 1 angegebenen Ventilanordnung möglich.

Die Modulatoreinrichtung besteht zweckmäßigerweise aus einem mit einem Mikrocontroller verbundenen oder in diesem integrierten Modulator, wobei der Speicher insbesondere mit dem Mikrocontroller verbunden oder in diesem integriert ist. Hierdurch ist eine komfortable und variable Datenspeicherung und Datenübertragung realisierbar, wobei zusätzliche oder geänderte Funktionen leicht programmierbar sind.

Im Elektromagnetventil ist in vorteilhafter Weise ein von den Steuerleitungen gespeistes Spannungsversorgungsmodul zur Spannungsversorgung der Modulatoreinrichtung integriert, das insbesondere zur Erzeugung einer stabilisierten Spannung ausgebildet ist. Dieses Spannungsversorgungsmodul kann auch mit einem elektrischen Energiespeicher versehen sein, um die Datenübertragung auch bei abgeschaltetem Ventil durchführen zu können.

Der Speicher zur Speicherung der Identifikationsdaten kann zusätzlich noch zur Speicherung von Wartungsdaten des Elektromagnetventils ausgebildet sein, insbesondere von Schaltzykluszahlen und/oder Informationen über die Einschaltdauer und den Schaltverlauf des Elektromagnetventils. Der Speicher ist dabei bevorzugt als EEPROM ausgebildet.

Die Modulation und die Demodulation bei der Datenübertragung beruhen bevorzugt auf dem Prinzip der Lastmodulation, Amplitudenmodulation, Phasenmodulation oder Frequenzmodulation.

Auch die Demodulatoreinrichtung besteht in vorteilhafter Weise aus einem mit einem Mikrocontroller verbundenen oder in diesem integrierten Demodulator.

Insbesondere wenn das Elektromagnetventil beziehungsweise die dort vorhandene Modulatoreinrichtung nicht mit einem Energiespeicher ausgestattet ist, kann dennoch eine Datenübertragung auch bei abgeschaltetem Elektromagnetventil dadurch erfolgen, dass ein vom Mikrocontroller der Demodulatoreinrichtung steuerbarer Schalter vorgesehen ist, der in einer ersten Schaltstellung Steuersignale zur Steuerung der Magnetspule den Steuerleitungen zuführt und in einer zweiten Schaltstellung eine die Magnetspule noch nicht betätigende Spannung den Steuerleitungen zuführt. Diese Spannung kann dann zum Betrieb der Modulatoreinrichtung und damit zur Datenübertragung dienen.

Die Demodulatoreinrichtung, insbesondere der darin enthaltene Mikrocontroller, ist in vorteilhafter Weise zur Umwandlung und Weiterleitung der demodulierten Signale als serielle Bussignale ausgebildet. Damit können die Informationen an eine entfernte Steuerzentrale übermittelt werden. Dies kann prinzipiell auch drahtlos erfolgen.

Die Modulatoreinrichtung und die Demodulatoreinrichtung sind zweckmäßigerweise zur unidirektionalen oder bidirektionalen Datenübertragung ausgebildet.

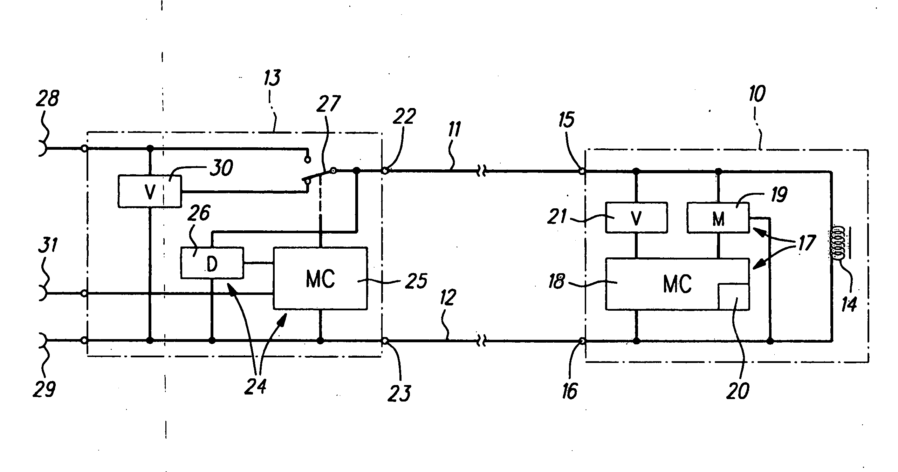

Ein Ausführungsbeispiel der Erfindung ist in der Zeichnung dargestellt und in der nachfolgenden Beschreibung näher erläutert. Die einzige Figur zeigt ein Blockschaltbild eines Elektromagnetventils mit integrierter Modulatoreinrichtung, das über zwei Leitungen mit einer Steuer- und/oder Kommunikationsvorrichtung verbunden ist, die eine Demodulatoreinrichtung enthält.

Das in der einzigen Figur dargestellte Ausführungsbeispiel einer fluidischen Ventilanordnung weist ein Elektromagnetventil 10 auf, das über zwei Steuerleitungen 11, 12 mit einer Steuer- und/oder Kommunikationsvorrichtung 13 verbunden ist.

Das Elektromagnetventil 10 enthält in üblicher Weise eine Magnetspule 14 zur Betätigung eines zur Vereinfachung nicht dargestellten Ventilglieds. Die beiden Steuerleitungen 11, 12 sind an Eingängen 15, 16, die beispielsweise als Eingangsklemmen ausgebildet sein können, des Elektromagnetventils 10 angeschlossen. Eine im Elektromagnetventil 10 integrierte Modulatoreinrichtung 17 besteht aus einem mit einem Mikrocontroller 18 verbundenen Modulator 19. Der Modulator 19 ist zur Einspeisung von Daten mit den beiden Eingängen 15, 16 verbunden. Der Mikrocontroller 18 enthält einen elektronischen Speicher 20, der beispielsweise als EEPROM ausgebildet sein kann. Dieser Speicher 20 kann selbstverständlich auch separat vom Mikrocontroller 18 angeordnet sein. Zur Spannungsversorgung der Modulatoreinrichtung 17 ist ein Spannungsversorgungsmodul 21 im Elektromagnetventil 10 integriert. Dieses Spannungsversorgungsmodul 21 erzeugt eine geregelte und bevorzugt stabilisierte Spannung.

Die beiden Steuerleitungen 11, 12 sind an Ausgängen 22, 23, die beispielsweise als Ausgangsklemmen ausgebildet sein können, an der Steuer- und/oder Kommunikationsvorrichtung 13 angeschlossen. Diese enthält eine Demodulatoreinrichtung 24, die aus einem mit einem Mikrocontroller 25 verbundenen Demodulator 26 besteht. Der Demodulator 26 ist wiederum an den beiden Ausgängen 22, 23 angeschlossen. Der Mikrocontroller 25 steuert einen elektrischen Schalter 27, der beispielsweise auch als elektronischer Schalter ausgebildet sein kann. Dieser Schalter verbindet in einer ersten, nicht dargestellten Schaltstellung einen ersten Versorgungsspannungsanschluss 28 mit der einen Steuerleitung 11, während ein zweiter Versorgungsspannungsanschluss 29 ständig mit der zweiten Steuerleitung 12 verbunden ist. In dieser nicht dargestellten Schaltstellung wird das Elektromagnetventil 10 betätigt, und die anliegende Spannung versorgt das Spannungsversorgungsmodul 21 im Elektromagnetventil 10 und damit die Modulatoreinrichtung 17.

In der zweiten, dargestellten Schaltstellung des Schalters 27 ist die erste Steuerleitung 11 mit einer Spannungsversorgungseinrichtung 30 verbunden, deren Spannung so gewählt ist, dass das Elektromagnetventil 10 noch nicht anspricht beziehungsweise abfällt, dass jedoch eine ausreichende Spannungsversorgung für das Spannungsversorgungsmodul 21 im Elektromagnetventil 10 gewährleistet ist. Die Spannungsversorgungseinrichtung 30 selbst ist an die beiden Versorgungsspannungsanschlüsse 28, 29 zur eigenen Versorgung angeschlossen.

Durch die Spannungsversorgungseinrichtung 30 in der Steuer- und/oder Kommunikationsvorrichtung 13 in Verbindung mit dem Schalter 27 ist gewährleistet, dass auch bei ausgeschaltetem Elektromagnetventil 10 die Spannungsversorgung für die Modulatoreinrichtung 17 gewährleistet ist. In einer alternativen Ausführung kann die Spannungsversorgungseinrichtung 30 auch entfallen, wobei dann das Spannungsversorgungsmodul 21 im Elektromagnetventil 10 einen Energiespeicher aufweist oder mit einem solchen verbunden ist, der beispielsweise eine Batterie oder ein Kondensator sein kann. Dieser wird dann jeweils bei betätigtem Elektromagnetventil 10 aufgeladen und stellt bei ausgeschaltetem Elektromagnetventil 10 die Spannungsversorgung der Modulatoreinrichtung 17 zur Verfügung.

Die beiden Versorgungsspannungsanschlüsse 28, 29 können mit einer entfernten Steuereinrichtung oder Steuerzentrale verbunden sein. Es ist jedoch auch möglich, dass der Mikrocontroller 25 Steuerfunktionen für das Elektromagnetventil 10 ganz oder teilweise übernimmt. Er ist über eine Kommunikationsschnittstelle 31 mit einer externen Steuervorrichtung oder Steuerzentrale verbindbar, wobei der Datenaustausch über serielle Signale erfolgen kann. Der Mikrocontroller 25 ist in diesem Falle mit einem Feldbusknoten beziehungsweise einer Feldbusstation verbunden oder enthält eine solche.

Im elektronischen Speicher 20 des Elektromagnetventils 10 sind Identifikationsdaten des Elektromagnetventils 10 gespeichert, beispielsweise Hersteilerangaben, Typangaben, Herstellungsdatum, Seriennummer und dergleichen. Weiterhin können noch zusätzlich Wartungs- beziehungsweise Diagnosedaten gespeichert sein, die ständig beim Betrieb des Elektromagnetventils 10 aktualisiert beziehungsweise ergänzt werden. Bei diesen Daten handelt es sich beispielsweise um die Zahl der Schaltzyklen, Informationen über die Einschaltdauer und den Schaltverlauf von Schaltvorgängen und dergleichen. Solche Daten können dem Anlagenbetreiber helfen, präventiv verschleißende Teile auszutauschen.

Diese gespeicherten Daten werden auf Anfrage oder zyklisch, zum Beispiel alle 1 bis 2 Sekunden, in modulierter Form zur Steuer- und/oder Kommunikationsvorrichtung 13 übertragen. Hierzu werden sie mittels des Modulators 19 als lastmodulierte, amplitudenmodulierte, phasenmodulierte oder frequenzmodulierte Signale auf die Steuerleitungen 11, 12 aufmoduliert. Die Modulation von Wechselsignalen auf Gleichspannungs-Leitungssignale ist zum Beispiel aus Feldbus-Techniken nach IEC 61158-2 bekannt. Dabei sind die Daten beispielsweise als kompletter String einschließlich Prüfsumme im Speicher 20 gespeichert. Über einen Timer des Mikrocontrollers 25 wird die Trägerfrequenz erzeugt, beispielsweise 500 kHz, und auf die Ausgänge 22, 23 gelegt. Der Inhalt des Speichers wird Byte-weise in ein Schieberegister geladen und seriallisiert. Abhängig vom gewünschten Protokoll kann dies mit oder ohne einzelne.Start- und Stopp-Bits beziehungsweise Parität erfolgen. Die Integrität der Daten wird bereits zu Produktionszeiten über eine Prüfsumme gewährleistet, die als Letztes im Speicher 20 abgelegt ist. Der binäre Datenstrom moduliert die Trägerfrequenz, wobei die Signale im Falle der Lastmodulation als Laständerung auf das Steuersignal des Elektromagnetventils 10 aufmoduliert werden.

Im Demodulator 26 wird das modulierte Datensignal beispielsweise über einen nicht dargestellten Kondensator ausgekoppelt und verstärkt. Die Demodulation erfolgt beispielsweise über eine Diode, und es erfolgt eine Anpassung an das Signalniveau üblicher Digitalschaltungen. Die so demodulierten Datensignale werden im Mikrocontroller 25 in serielle Ausgangssignale umgewandelt und der Kommunikationsschnittstelle 31 zugeführt, die einen Busanschluss darstellen kann.

Falls die Daten nicht zyklisch übertragen werden sollen, können auch seitens des Mikrocontrollers 25 in der Steuer- und/oder Kommunikationsvorrichtung 13 Datenanfragen an das Elektromagnetventil 10 übermittelt werden, und die Übertragung der Daten erfolgt dann erst nach einer solchen Anfrage. In diesem Falle ist sowohl der Modulator 19 im Elektromagnetventil 10 als auch der Demodulator 26 in der Steuer- und/oder Kommunikationsvorrichtung 13 als kombinierter Modulator / Demodulator ausgebildet.

Im dargestellten und beschriebenen Ausführungsbeispiel enthält die Ventilanordnung nur ein Elektromagnetventil. Selbstverständlich können an die Steuer- und/oder Kommunikationsvorrichtung auch mehrere Elektromagnetventile angeschlossen werden, beispielsweise sogenannte Ventilbatterien. Dabei kann prinzipiell auch jedem dieser Elektromagnetventile eine eigene Steuer- und/oder Kommunikationsvorrichtung zugeordnet werden.

## Patentansprüche

1. fluidische Ventilanordnung mit wenigstens einem Elektromagnetventil (10), dessen Magnetspule (14) über nur zwei Steuerleitungen (11, 12) mit einer elektronischen Steuer- und/oder Kommunikationsvorrichtung (13) verbunden oder verbindbar ist, **dadurch gekennzeichnet, dass** im Elektromagnetventil (10) ein nichtflüchtiger, wenigstens Identifikationsdaten des Elektromagnetventils (10) enthaltender Speicher (20) sowie eine Modulatoreinrichtung (17) zur Aufmodulierung von Daten des Elektromagnetventils (10) auf die beiden Versorgungsleitungen (11, 12) integriert sind, wobei die Steuer- und/oder Kommunikationsvorrichtung (13) eine Demodulatoreinrichtung (24) zur Demodulation der aufmodulierten Daten aufweist.

2. Ventilanordnung nach Anspruch 1, **dadurch gekennzeichnet, dass** die Modulatoreinrichtung (17) aus einem mit einem Mikrocontroller (18) verbundenen oder in diesem integrierten Modulator (19) besteht.

3. Ventilanordnung nach Anspruch 2, **dadurch gekennzeichnet, dass** der Speicher (20) mit dem Mikrocontroller (18) verbunden oder in diesem integriert ist.

4. Ventilanordnung nach einem der vorhergehenden Ansprüche, **dadurch gekennzeichnet, dass** im Elektromagnetventil (10) ein von den Steuerleitungen (11, 12) gespeistes Spannungsversorgungsmodul (21) zur Spannungsversorgung der Modulatoreinrichtung (17) integriert ist, das insbesondere zur Erzeugung einer stabilisierten Spannung ausgebildet ist.

5. Ventilanordnung nach einem der vorhergehenden Ansprüche, **dadurch gekennzeichnet, dass** der Speicher (20) zur Speicherung auch von Wartungsdaten des Elektromagnetventils (10) ausgebildet ist, insbesondere die Zahl der Schaltzyklen und/oder Informationen über die Einschaltdauer und den Schaltverlauf.

6. Ventilanordnung nach einem der vorhergehenden Ansprüche, **dadurch gekennzeichnet, dass** der Speicher (20) als EEPROM ausgebildet ist.

7. Ventilanordnung nach einem der vorhergehenden Ansprüche, **dadurch gekennzeichnet, dass** die Modulation und die Demodulation auf dem Prinzip der Lastmodulation, Amplitudenmodulation, Phasenmodulation oder Frequenzmodulation beruhen.

8. Ventilanordnung nach einem der vorhergehenden Ansprüche, **dadurch gekennzeichnet, dass** die Demodulatoreinrichtung (24) aus einem mit einem Mikrocontroller (25) verbundenen oder in diesem integrierten Demodulator (26) besteht.

9. Ventilanordnung nach Anspruch 8, **dadurch gekennzeichnet, dass** ein vom Mikrocontroller (25) der Demodulatoreinrichtung (24) steuerbarer Schalter (17) vorgesehen ist, der in einer ersten Schaltstellung Steuersignale zur Steuerung der Magnetspule (14) den Steuerleitungen (11, 12) zuführt und in einer - zweiten Schaltstellung eine die Magnetspule (14) noch nicht betätigende Spannung den Steuerleitungen (11, 12) zuführt.

10. Ventilanordnung nach Anspruch 9, **dadurch gekennzeichnet, dass** die Steuer- und/oder Kommunikationsvorrichtung (13) eine Spannungsversorgungseinrichtung (30) zur Erzeugung der die Magnetspule (14) noch nicht betätigende Spannung aufweist.

11. Ventilanordnung nach einem der Ansprüche 8 bis 10, **dadurch gekennzeichnet, dass** die Demodulatoreinrichtung (24), insbesondere der darin enthaltene Mikrocontroller (25), zur Umwandlung und Weiterleitung der demodulierten Signale als serielle Bussignale ausgebildet ist.

12. Ventilanordnung nach einem der vorhergehenden Ansprüche, **dadurch gekennzeichnet, dass** die Modulatoreinrichtung (17) und die Demodulatoreinrichtung (24) zur unidirektionalen oder bidirektionalen Datenübertragung ausgebildet sind.

## Claims

1. Fluidic valve assembly with at least one solenoid valve (10) with a solenoid coil (14) which is connected or connectable via only two control lines (11, 12) to an electronic control and/or communications device (13), **characterised in that** integrated in the solenoid valve (10) are a non-volatile memory (20) containing at least identification data of the solenoid valve (10), together with a modulator device (17) for modulating data of the solenoid valve (10) to the two control lines (11, 12), wherein the control and/or communications device (13) has a demodulator device (24) for demodulation of the modulated data.

2. Valve assembly according to claim 1, **characterised in that** the modulator device (17) consists of a modulator (19) connected to or integral with a microcontroller (18).

3. Valve assembly according to claim 2, **characterised in that** the memory (20) is connected to or integral with the microcontroller (18).

4. Valve assembly according to any of the preceding claims, **characterised in that** there is integrated in the solenoid valve (10) a voltage supply module (21), fed by the control lines (11, 12), for supplying voltage to the modulator device (17), and designed in particular to generate a stabilised voltage.

5. Valve assembly according to any of the preceding claims, **characterised in that** the memory (20) is also designed to store maintenance data of the solenoid valve (10), in particular the number of switching cycles and/or information relating to the time switched-on and the switching pattern.

6. Valve assembly according to any of the preceding claims, **characterised in that** the memory (20) is in the form of an EEPOM.

7. Valve assembly according to any of the preceding claims, **characterised in that** the modulation and demodulation are based on the principle of load modulation, amplitude modulation, phase modulation or frequency modulation.

8. Valve assembly according to any of the preceding claims, **characterised in that** the demodulator device (24) comprises a demodulator (26) connected to or integral with a microcontroller (25).

9. Valve assembly according to claim 8, **characterised in that** there is provided a switch (17) controllable by the microcontroller (25) of the demodulator device (24) and which in a first control position feeds to the control lines (11, 12) control signals to control the solenoid coil (14), and in a second position feeds to the control lines (11, 12) a voltage which does not yet actuate the solenoid coil (14).

10. Valve assembly according to claim 9, **characterised in that** the control and/or communications device (13) has a voltage supply device (30) to generate the voltage which does not yet actuate the solenoid coil (14).

11. Valve assembly according to any of claims 8 to 10, **characterised in that** the demodulator device (24), in particular the microcontroller (25) contained within it, is designed for the conversion and passing on of the demodulated signals as serial bus signals.

12. Valve assembly according to any of the preceding claims, **characterised in that** the modulator device (17) and the demodulator device (24) are designed for unidirectional or bidirectional data transmission.

## Revendications

1. Système de soupapes fluidiques avec au moins une soupape électromagnétique (10), dont la bobine d'aimant (14) est raccordée ou raccordable par deux lignes de commande (11, 12) seulement à un dispositif de commande et/ou de communication électronique (13), **caractérisé en ce qu'**une mémoire (20) non volatile contenant au moins des données d'identification de la soupape électromagnétique (10), et un dispositif modulateur (17) sont intégrés à la soupape électromagnétique (10) pour la modulation de données de la soupape électromagnétique (10) sur les deux lignes d'alimentation (11, 12), le dispositif de commande et/ou de communication (13) comportant un dispositif démodulateur (24) pour la démodulation des données modulées.

2. Système de soupapes selon la revendication 1, **caractérisé en ce que** le dispositif modulateur (17) se compose d'un modulateur (19) relié à un microcontrôleur (18) ou intégré à celui-ci.

3. Système de soupapes selon la revendication 2, **caractérisé en ce que** la mémoire (20) est reliée au microcontrôleur (18) ou intégrée à celui-ci.

4. Système de soupapes selon l'une des revendications précédentes, **caractérisé en ce qu'**un module d'alimentation en tension (21) alimenté par les lignes de commande (11, 12) pour l'alimentation en tension du dispositif modulateur (17) est intégré à la soupape électromagnétique (10), lequel est en particulier réalisé pour générer une tension stabilisée.

5. Système de soupapes selon l'une des revendications précédentes, **caractérisé en ce que** la mémoire (20) est aussi réalisée pour la mémorisation de données de maintenance de la soupape électromagnétique (10), en particulier le nombre des cycles de commutation et/ou des informations sur la durée d'activation et le processus de commutation.

6. Système de soupapes selon l'une des revendications précédentes, **caractérisé en ce que** la mémoire (20) est réalisée comme EEPROM.

7. Système de soupapes selon l'une des revendications précédentes, **caractérisé en ce que** la modulation et la démodulation sont fondées sur le principe de modulation de charge, de modulation d'amplitude, de modulation de phase ou de modulation de fréquence.

8. Système de soupapes selon l'une des revendications précédentes, **caractérisé en ce que** le dispositif démodulateur (24) se compose d'un démodulateur (26) relié à un microcontrôleur (25) ou intégré à celui-ci.

9. Système de soupapes selon la revendication 8, **caractérisé en ce qu'**un commutateur (17) commandable par le microcontrôleur (25) du dispositif démodulateur (24) est prévu, lequel, dans une première position de commutation, délivre aux lignes de commande (11, 12) des signaux de commande pour la commande de la bobine d'aimant (14) et, dans une deuxième position de commutation, délivre aux lignes de commande (11, 12) une tension n'actionnant pas encore la bobine d'aimant (14).

10. Système de soupapes selon la revendication 9, **caractérisé en ce que** le dispositif de commande et/ou de communication (13) comporte un dispositif d'alimentation en tension (30) pour générer la tension n'actionnant pas encore la bobine d'aimant (14).

11. Système de soupapes selon l'une des revendications 8 à 10, **caractérisé en ce que** le dispositif démodulateur (24), en particulier le microcontrôleur (25) qu'il contient, est réalisé pour la conversion et la transmission des signaux démodulés en tant que signaux de bus sériels.

12. Système de soupapes selon l'une des revendications précédentes, **caractérisé en ce que** le dispositif modulateur (17) et le dispositif démodulateur (24) sont réalisés pour la transmission unidirectionnelle ou bidirectionnelle de données.
